# EUROPEAN PATENT SPECIFICATION

(11) **EP 3 550 700 B1**
(45) Date of publication and mention of the grant of the patent: **16.06.2021**
(21) Application number: 19167402.7
(22) Date of filing: 04.04.2019
(51) Int. Cl.: H02K 3/52, H02K 7/14

(54) **STATOR, MOTOR AND COMPRESSOR**
STATOR, MOTOR UND VERDICHTER
STATOR, MOTEUR ET COMPRESSEUR

(30) Priority: 06.04.2018 JP 2018074089
(43) Date of publication of application: 09.10.2019
(73) Proprietor: MITSUBISHI HEAVY INDUSTRIES THERMAL SYSTEMS, LTD., 108-8215 Tokyo (JP)
(72) Inventor: OGAWA, Makoto, TOKYO, 108-8215 (JP); SATO, Hajime, TOKYO, 108-8215 (JP); KIMATA, Yoshiyuki, TOKYO, 108-8215 (JP); ESAKI, Ikuo, TOKYO, 108-8215 (JP); UNO, Masanari, TOKYO, 108-8215 (JP); SHIMAYA, Hirofumi, TOKYO, 108-8215 (JP)
(74) Representative: Cabinet Beau de Loménie

(56) References cited:
- EP-A1- 1 806 822
- US-A1- 2003 048 023
- US-A1- 2014 145 545

## Description

### BACKGROUND OF THE INVENTION

### Technical Field

The present invention relates to a stator, a motor, and a compressor.

### Background Art

A rotary compressor is known as a type of a compressor used for an air conditioner. The rotary compressor includes a motor driven by an external power supply and a compression mechanism portion driven by the motor in a housing. The compression mechanism portion includes a crankshaft which is rotationally driven by the motor, a piston rotor which eccentrically rotates in accordance with rotation of the crankshaft, and a cylinder which covers the piston rotor. When the piston rotor eccentrically rotates with respect to the crankshaft in the cylinder, a refrigerant in the cylinder is compressed, and thus a high-pressure compressed refrigerant is generated.

For example, a motor for a rotary compressor disclosed in PTL 1 includes a rotor, a stator having a plurality of coils which cover the rotor from an outer peripheral side thereof, and a housing which covers the rotor and the stator. The stator includes an annular stator core and a coil installed at the stator core. The stator core has an annular outer edge portion (yoke), and a plurality of magnetic pole teeth (teeth) which extend from the outer edge portion toward an inner peripheral side. A slot (a space) is formed between a pair of magnetic pole teeth adjacent to each other. A coil is formed by winding a winding around the magnetic pole teeth. The outer edge portion of the stator core is fixed to an inner peripheral surface of the housing by an interference fit. PTL2 discloses a wire guide for use in an electric machine. PTL3 discloses a motor generator and automobile carrying the same. PTL4 discloses an insulator for an armature of a dynamo-electric machine.

### Citation List

### Patent Literature

[PTL 1] Japanese Unexamined Patent Application, First Publication No. 2002-247790
[PTL2] United States Patent Application Publication n° US2014/145545A1
[PTL3] European patent application n° EP 1806822A1
[PTL4] United States Patent Application Publication n° US2003/048023A1

### Summary of Invention

### Technical Problem

However, when the yoke and the teeth in the stator core are connected on a plane and an acute corner portion is formed, stress concentration occurs at the corner portion in a state in which the stator core is fitted into the housing, and magnetic flux saturation is likely to occur at the stress concentration portion, leading to an increase in iron loss of the motor. On the other hand, when the yoke and teeth are connected on a curved surface, in the vicinity of a region in which the curved surface is formed, since a length or tension per one turn of the winding wound on the respective teeth is not constant, there is a possibility that winding loosening may occur during manufacturing. Thus, motor performance and ease of manufacture are in a trade-off relationship, and it has been difficult to achieve both.

The present invention has been realized to solve the above-described problems, and an object thereof is to provide a stator, a motor, and a compressor which can be easily manufactured while securing stable performance.

### Solution to Problem

A solution to the problem is a stator as defined in claim 1. There is provided a stator including a stator core including an annular yoke centered on an axis, and a plurality of teeth protruding inward from an inner peripheral surface of the yoke in a radial direction centered on the axis, a bobbin provided on main surfaces of the stator core, the main surfaces facing both sides of the stator core in a direction of the axis, and a coil having a winding wound on the teeth and the bobbin, wherein the respective teeth have a non-constant width portion of which a length in a circumferential direction around the axis differs depending on a position in the radial direction, the bobbin has a support portion, the support portion extending in the radial direction and facing one side in the direction of the axis, the support portion further having a support surface which supports the winding and faces in the direction of the axis, and the support portion has a winding length adjustment portion which is formed at a position corresponding to the non-constant width portion when seen in the direction of the axis, reduces a winding length which is a length of the winding around the support portion, as a length of the respective teeth in the circumferential direction increases and increases the length as the length of the respective teeth in the circumferential direction decreases, and stress concentration in the stator core is suppressed by the winding length adjustment portion.

With such a constitution, even when a region in which the length in the circumferential direction changes is formed in the respective teeth, the length of the winding per turn can be constant, and a tension applied to the winding can be constant. Therefore, the length of the winding can be kept constant while minimizing stress concentration in the stator core.

According to an aspect of the present invention, the winding length adjustment portion may be formed so that a length between the support surface and the main surface in the direction of the axis decreases as the length of the respective teeth in the circumferential direction increases and the dimension between the support surface and the main surface in the direction of the axis increases as the length of the respective teeth decrease.

With such a constitution, simply by changing the height of the support surface with respect to the main surface, the length of the winding of the portion wound on the support can be made constant.

According to an aspect of the present invention, in the winding length adjustment portion, the support surface may be an inclined surface which is inclined such that it approaches the main surface as the length of the respective teeth in the circumferential direction increases.

With such a constitution, it is possible to keep the length of the winding constant while minimizing stress concentration in the stator core due to a simple structure in which the inclined surface is formed on the bobbin.

According to an aspect of the present invention, the respective teeth may include a tooth main body which has a constant length in the circumferential direction and extends in the radial direction, and a first curved portion which is the non-constant width portion and connects the tooth main body to the yoke in a curved surface in which the dimension in the circumferential direction gradually increases from the tooth main body toward the yoke when seen in the direction of the axis.

With such a constitution, in a connection portion between the tooth main body and the yoke in the stator core, it is possible to prevent change in the length of the winding while minimizing the stress concentration at the connection portion between the tooth body and the yoke.

According to an aspect of the present invention, the respective teeth may include a flange portion which is provided inward in the radial direction with respect to the tooth main body and in which the dimension in the circumferential direction is longer than the tooth main body, and a second curved portion which is the non-constant width portion and connects the tooth main body to the flange portion in the curved surface in which the length in the circumferential direction gradually increases from the tooth main body toward the flange portion when seen in the direction of the axis.

With such a constitution, in a connection portion between the tooth body and the flange portion in the stator core, it is possible to prevent a change in the length of the winding while minimizing the stress concentration at the connection portion between the tooth body and the flange portion.

The invention concerns furthermore a motor including a rotor which is rotatable around an axis, and the stator as defined in any one of the claims 1 to 5 which surrounds the rotor from an outer peripheral side of the rotor.

With such a constitution, it is possible to provide a motor which can be easily manufactured and has improved performance.

The invention concerns furthermore a compressor including the motor, a compression mechanism portion which is driven by the motor to compress fluid, and a housing which covers the motor and the compression mechanism portion.

With such a constitution, a compressor with improved performance in accordance with the improvement of the efficiency of the motor can be provided.

### Advantageous Effects of Invention

According to the present invention, manufacture is able to be performed easily while securing stable performance.

### Brief Description of Drawings

FIG. 1 is a cross-sectional view showing a constitution of a compressor and a motor according to an embodiment of the present invention.
FIG. 2 is a plan view of a stator core according to the embodiment of the present invention.
FIG. 3 is an explanatory view showing a corresponding relationship between a shape of the stator core and a shape of a bobbin according to the embodiment of the present invention.
FIG. 4 is a cross-sectional view of the stator core according to the embodiment of the present invention when seen in a radial direction with respect to an axis.

### Description of Embodiments

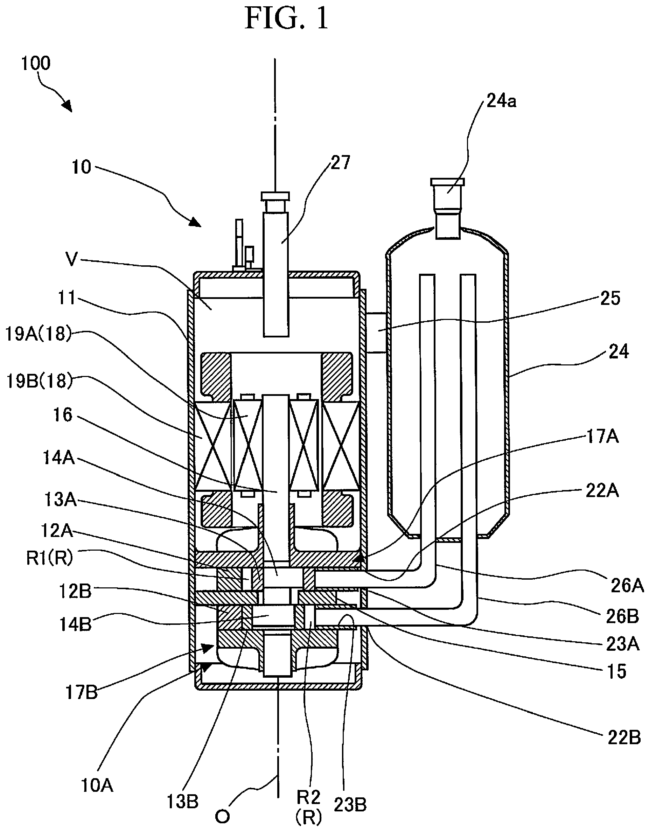

A compressor 10 according to an embodiment of the present invention will be described with reference to FIGS. 1 to 4. In addition, the expressions "the same" and "parallel" used in the following do not mean strictly parallel or only the same, but substantially the same or substantially parallel, design tolerances and manufacturing errors are acceptable.

As shown in FIG. 1, a compressor system 100 according to the embodiment includes an accumulator 24, suction pipes 26A and 26B (a first suction pipe 26A and a second suction pipe 26B), and a compressor 10. The compressor 10 is a two-cylinder type rotary compressor. The compressor 10 includes a motor 18 driven by an external power supply, and a compression mechanism portion 10A which is driven by the motor 18 and generates a compressed refrigerant (fluid), and a housing 11 which covers the motor 18 and the compression mechanism portion 10A.

The compression mechanism portion 10A includes a crankshaft 16 rotated by the motor 18, piston rotors 13A and 13B (a first piston rotor 13A and a second piston rotor 13B) which eccentrically rotate in accordance with rotation of the crankshaft 16, and cylinders 12A and 12B (a first cylinder 12A and a second cylinder 12B) in which compression chambers for accommodating the piston rotors 13A and 13B are formed.

In the compression mechanism portion 10A, the disk-shaped first cylinder 12A and second cylinder 12B are provided in two upper and lower stages in the cylindrical housing 11. The housing 11 forms a discharge space V, in which the compressed refrigerant is discharged, by surrounding the first cylinder 12A and the second cylinder 12B. The cylindrical first piston rotors 13A and second piston rotors 13B each having an external form smaller than an inside between inner wall surfaces of each of the first cylinder 12A and the second cylinder 12B are disposed inside the first cylinder 12A and the second cylinder 12B. The first piston rotor 13A and the second piston rotor 13B are respectively inserted and fixed into eccentric shaft portions 14A and 14B which will be described below.

Phases of the first piston rotor 13A of the upper cylinder and the second piston rotor 13B of the lower cylinder are different from each other by 180°. A disk-shaped partition plate 15 is provided between the upper first cylinder 12A and the lower second cylinder 12B. A space R in the upper first cylinder 12A and a space R in the lower second cylinder 12B do not communicate with each other and are partitioned into an upper compression chamber R1 and a lower compression chamber R2 by the partition plate 15.

The crankshaft 16 is supported rotatably around an axis O by an upper bearing portion 17A fixed to the first cylinder 12A and a lower bearing portion 17B fixed to the second cylinder 12B. The crankshaft 16 has eccentric shaft portions 14A and 14B offset in a direction orthogonal to the axis O which is a center line of the crankshaft 16. When the eccentric shaft portions 14A and 14B turn around the central axis of the crankshaft 16, the upper first piston rotor 13A and the lower second piston rotors 13B follow this turning and eccentrically rotate in the first cylinder 12A and the second cylinder 12B, respectively.

The crankshaft 16 protrudes upward from the upper bearing portion 17A (that is, in a direction in which the motor 18 is located when seen from the compression mechanism portion 10A). A rotor 19A of the motor 18 for rotationally driving the crankshaft 16 is integrally provided at a portion of the crankshaft 16 which protrudes upward from the upper bearing portion 17A. A stator 19B is fixed to an inner peripheral surface of the housing 11 to face an outer peripheral portion of the rotor 19A.

In the compressor 10, the accumulator 24 for gas-liquid separation of the refrigerant prior to supply to the compressor 10 is fixed to the housing 11 via a stay 25. A refrigerant before compression is stored in the accumulator 24. The first suction pipe 26A and the second suction pipe 26B for suctioning the refrigerant in the accumulator 24 to the compressor 10 are provided between the accumulator 24 and the compressor 10. One ends of the first suction pipe 26A and the second suction pipe 26B are connected to a lower portion of the accumulator 24. The other ends of the first suction pipe 26A and the second suction pipe 26B are respectively connected to suction ports 23A and 23B (a first suction port 23A and a second suction port 23B) formed in the first cylinder 12A and the second cylinder 12B through openings 22A and 22B (a first opening 22A and a second opening 22B) formed in the housing 11.

The compressor 10 introduces the refrigerant from an inlet 24a of the accumulator 24 to the inside of the accumulator 24. Specifically, the refrigerant is separated into gas and liquid in the accumulator 24. The separated gas phase is supplied from the first suction pipe 26A and the second suction pipe 26B to the compression chambers R1 and R2, which are internal spaces of the first cylinder 12A and the second cylinder 12B, through the first suction port 23A and the second suction port 23B.

Volumes of the compression chambers R1 and R2 are gradually decreased and the refrigerant is compressed by eccentrically rotating the first piston rotor 13A and the second piston rotor 13B. The refrigerant passes around the motor 18 and is then discharged to a pipe 27 constituting a refrigeration cycle via an outlet provided at the top.

The motor 18 includes the rotor 19A which is rotatable around the axis O, and the stator 19B which surrounds the rotor 19A from an outer peripheral side thereof around the axis O. The rotor 19A is provided at an upper end of the crankshaft 16. The rotor 19A has a permanent magnet therein, and an outer shape thereof has a substantially cylindrical shape centered on the axis O.

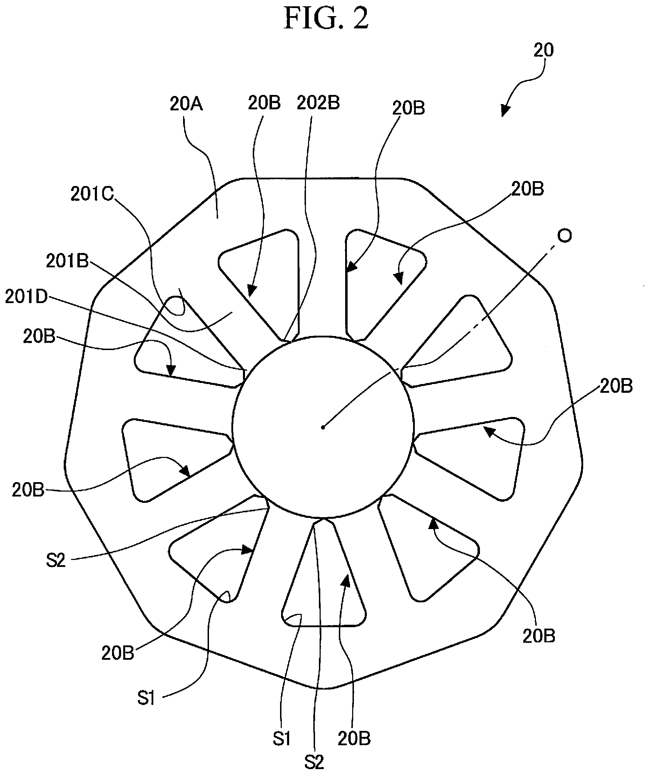

As shown in FIGS. 2 to 4, the stator 19B includes a stator core 20, a bobbin 30, and a coil 40. The stator core 20 is formed by stacking plate-shaped electromagnetic steel plates 21 expanding in a plane orthogonal to the axis O.

As shown in FIG. 2, the stator core 20 includes an annular yoke 20A centered on the axis O, and a plurality of (nine) teeth 20B formed to project from an inner peripheral surface of the yoke 20A. The yoke 20A is formed in a regular polygonal shape when seen in a direction of the axis O. The yoke 20A in the embodiment is formed in a regular nonagonal shape. Each apex angle of the yoke 20A is chamfered in an arc shape to fit on the inner peripheral surface of the housing 11. The chamfered portions are fitted to the inner peripheral surface of the housing 11.

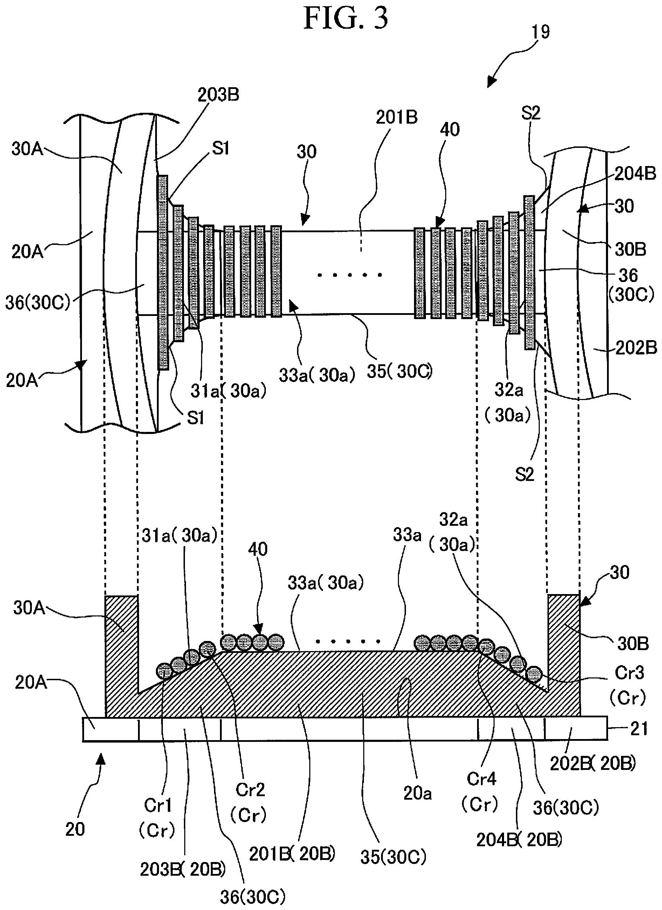

The plurality of teeth 20B protrude from the inner peripheral surface of the yoke 20A at intervals in a circumferential direction about the axis O. As shown in FIGS. 2 and 3, the teeth 20B includes tooth main bodies 201B, flange portions 202B, first curved portions 203B, and second curved portions 204B.

The tooth main body 201B extends inward in a radial direction about the axis O with respect to the inner peripheral surface of the yoke 20A. The tooth main body 201B has a constant length in the circumferential direction to form a linear shape when seen in the direction of the axis O.

The flange portion 202B is provided radially inward with respect to the tooth main body 201B. When the flange portion 202B is seen in the direction of the axis O, a length in the circumferential direction is longer than that of the tooth main body 201B.

The first curved portion 203B connects the tooth main body 201B to the yoke 20A. The first curved portion 203B has a first curved surface S1 which is curved so that the dimension in the circumferential direction gradually increases from the tooth main body 201B toward the yoke 20A when seen in the direction of the axis O. The tooth main body 201B and the yoke 20A are connected by the first curved portion 203B in a state in which an angle R is formed.

The second curved portion 204B connects the tooth main body 201B to the flange portion 202B. The second curved portion 204B has a second curved surface S2 which is curved so that the length in the circumferential direction gradually increases from the tooth main body 201B toward the flange portion 202B when seen in the direction of the axis O. The tooth main body 201B and the flange portion 202B are connected by the second curved surface S2 in a state in which an angle R is formed.

The first curved portion 203B and the second curved portion 204B are non-constant width portions in each of the teeth 20B. The non-constant width portion is a region in the respective teeth 20B in which the length in the circumferential direction differs depending on a position in the radial direction. On the other hand, the tooth main body 201B is a constant width portion in each of the teeth 20B. The constant width portion is a region in the respective teeth 20B in which the length in the circumferential direction is constant at any position in the radial direction.

The bobbin 30 is a member formed of a resin and provided for holding the winding such that it does not become detached from the stator core 20 when the coil 40 described later is formed. The bobbin 30 is provided on each main surface 20a of the stator core 20. The main surfaces 20a are surfaces of the stator core 20 facing in the direction of the axis O. That is, the main surfaces 20a are surfaces on both sides of the stator core 20 in the direction of the axis O. A pair of bobbins 30 have the same constitution. Therefore, hereinafter, only the bobbin 30 located on one side (upper side) in the direction of the axis O will be described.

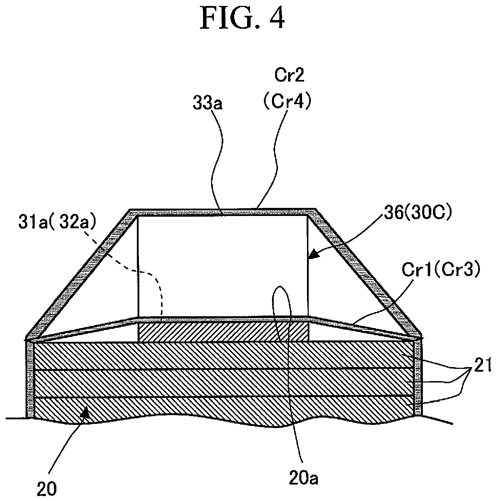

As shown in FIG. 3 or 4, the bobbin 30 includes an arc-shaped outer edge portion 30A and an inner edge portion 30B centered on the axis O, and a plurality of bobbin base portions (support portions) 30C which connect the outer edge portion 30A to the inner edge portion 30B in the radial direction.

The outer edge portion 30A and the inner edge portion 30B have a plate shape extending from the main surface 20a toward one side in the direction of the axis O. A diameter of the outer edge portion 30A is larger than a diameter of the inner edge portion 30B.

The bobbin base portion 30C extends in the radial direction to correspond to the respective teeth 20B when seen in the direction of the axis O. The bobbin base portion 30C connects the outer edge portion 30A to the inner edge portion 30B. A surface of the bobbin base portion 30C facing one side in the direction of the axis O (a surface opposite to a surface facing the main surface 20a in the direction of the axis O) is a support surface 30a which supports the winding of the coil 40. That is, the bobbin base portion 30C is a region of the bobbin 30 in which the winding is wound. The bobbin base portion 30C includes a base main body 35 and a winding length adjustment portion 36.

The base main body 35 is formed at a position corresponding to (overlapping) the tooth main body 201B when viewed in the direction of the axis O. The base main body 35 is formed so that a winding length, which is a length of the winding of the portion wound around the bobbin base portion 30C per one turn of the winding, is constant at any position in the radial direction. The base main body 35 is formed so that a length between the main surface 20a and the support surface 30a in the direction of the axis O does not change. Specifically, the base main body 35 extends in the radial direction so that lengths in the circumferential direction and the direction of the axis O are constant. As the support surface 30a, a base surface 33a parallel to the main surface 20a is formed on the base main body 35.

The winding length adjustment portion 36 is formed at a position corresponding to (overlapping) each of the first curved portion 203B and the second curved portion 204B when seen in the direction of the axis O. That is, the winding length adjustment portion 36 is formed on both sides of the base main body 35 and connect the base main body 35 to the outer edge portion 30A and the inner edge portion 30B. The winding length adjustment portion 36 is formed to reduce the winding length as a length of the respective teeth 20B in the circumferential direction increases and to increase the winding length as the length of the respective teeth 20B in the circumferential direction decreases. Specifically, the winding length adjustment portion 36 is formed to have a constant length in the circumferential direction. The winding length adjustment portion 36 is formed so that the dimension between the main surface 20a and the support surface 30a in the direction of the axis O changes.

A first inclined surface 31a which is inclined with respect to the main surface 20a is formed as the support surface 30a of the winding length adjustment portion 36 on the side corresponding to the first curved portion 203B in the radial direction. The first inclined surface 31a is inclined to gradually separate from the main surface 20a as it goes from the outer side to the inner side in the radial direction. That is, the first inclined surface 31a is a flat surface inclined to face the outer side in the radial direction when seen in the circumferential direction.

A second inclined surface 32a which is inclined with respect to the main surface 20a is formed as the support surface 30a of the winding length adjustment portion 36 on the side corresponding to the second curved portion 204B in the radial direction. The second inclined surface 32a is inclined to become gradually closer to the main surface 20a as it goes from the outer side to the inner side in the radial direction. That is, the second inclined surface 32a is a flat surface inclined to face the inner side in the radial direction when seen in the circumferential direction.

Accordingly, in the bobbin base portion 30C, a height of the support surface 30a with respect to the main surface 20a is changed from the base main body 35 to the outer edge portion 30A or the inner edge portion 30B by the winding length adjustment portion 36.

The coil 40 is formed by winding a winding around the respective teeth 20B and the respective bobbin base portions 30C of the pair of bobbins 30 as described above. That is, in the embodiment, nine coils 40 are provided at intervals in the circumferential direction. More specifically, the coil 40 has a plurality of turning portions Cr, each of which turns around a surface of the respective teeth 20B facing the one side in the circumferential direction, a surface thereof facing the other side, and the support surface 30a of each of the pair of bobbin base portions 30C. The plurality of turning portions Cr are formed by one continuous winding. The plurality of turning portions Cr are arranged to be adjacent to the respective teeth 20B and the bobbin base portion 30C in the radial direction without gaps therebetween and form a layered winding layer. The coil 40 is formed by providing a plurality of winding layers on the teeth 20B and the pair of bobbin base portions 30C.

As shown in FIG. 4, in the first curved portion 203B (the second curved portion 204B), the winding is wound to extend from a surface of the stator core 20 facing the one side in the circumferential direction to a surface of the stator core 20 facing the other side in the circumferential direction through the first inclined surface 31a (the second inclined surface 32a).

Here, as shown in FIG. 3, among the plurality of windings (the turning portions Cr) wound on the first inclined surface 31a, a first outer turning portion Cr1 located at the outermost side in the radial direction is passes through a portion of the first curved portion 203B (the non-constant width portion) having the largest dimension in the circumferential direction. Therefore, a length of the winding in the circumferential direction when seen in the direction of the axis O is relatively long in the first outer turning portion Cr1, as compared to a first inner turning portion Cr2 located at the innermost side in the radial direction on the first inclined surface 31a. However, the height of the first inclined surface 31a with respect to the main surface 20a is the smallest at the outermost side of the winding length adjustment portion 36 in the radial direction on the first curved portion 203B. Further, the height of the first inclined surface 31a with respect to the main surface 20a is the largest at the innermost of the winding length adjustment portion 36 in the radial direction on the first curved portion 203B. Thus, the length of the winding in the direction of the axis O when seen in the circumferential direction becomes shorter in the first outer turning portion Cr1 than in the first inner turning portion Cr2 by a difference in height of the first inclined surface 31a. As a result, the winding length of the first outer turning portion Cr1 and the winding length of the first inner turning portion Cr2 are the same as each other.

Similarly, among the plurality of windings (the turning portions Cr) wound on the second inclined surface 32a, a second inner turning portion Cr3 located at the innermost side in the radial direction is passes through a portion of the second curved portion 204B (the non-constant width portion) having the largest dimension in the circumferential direction. Therefore, a length of the winding in the circumferential direction when seen in the direction of the axis O is relatively long in the second inner turning portion Cr3, as compared to a second outer turning portion Cr4 located at the outermost side in the radial direction on the second inclined surface 32a. However, the height of the second inclined surface 32a with respect to the main surface 20a is the smallest at the innermost side of the winding length adjustment portion 36 in the radial direction on the second curved portion 204B. Further, the height of the second inclined surface 32a with respect to the main surface 20a is the largest at the outermost of the winding length adjustment portion 36 in the radial direction on the second curved portion 204B. Thus, the length of the winding in the direction of the axis O when seen in the circumferential direction becomes shorter in the second inner turning portion Cr3 than in the second outer turning portion Cr4 by a difference in height of the second inclined surface 32a. As a result, the winding length of the second outer turning portion Cr4 and the winding length of the second inner turning portion Cr3 are the same as each other.

As one of measures for improving efficiency of the motor 18, it is conceivable to increase the number of windings wound on the teeth 20B. As a structure for that, for example, there is a structure in which an acute corner portion is formed at a connection portion between the yoke 20A and the teeth 20B in the stator core 20 to increase a radial length of the respective teeth 20B capable of winding the winding. However, when such a corner portion is formed, stress concentration occurs at the corner portion in a state in which the stator core 20 is fitted to the inner peripheral surface of the housing 11. As a result, damage to the stator core 20 or iron loss of the motor 18 may occur, and thus the efficiency may be deteriorated. On the other hand, when the yoke 20A and the teeth 20B are connected in a curved shape such as the first curved surface S1 or the second curved surface S2, the stress concentration at the corner portion can be reduced. However, in the vicinity of the corner portion formed in the curved shape, the length in the circumferential direction increases, as compared to the tooth main body 201B. As a result, since the length or tension per one turn of the winding does not become constant, there is a possibility that winding loosening may occur during manufacturing.

However, in the embodiment, the winding length adjustment portion 36 is formed corresponding to the first curved portion 203B and the second curved portion 204B. Therefore, the dimension between the support surface 30a and the main surface 20a (the dimension in the direction of the axis O) changes in accordance with a change in the dimension of the respective teeth 20B in circumferential direction. That is, a height of the support surface 30a with respect to the main surface 20a is relatively small at a portion of the respective teeth 20B in which the length in the circumferential direction is relatively large. On the other hand, the height of the support surface 30a with respect to the main surface 20a is relatively large at a portion of the respective teeth 20B in which the length in the circumferential direction is relatively small. Therefore, a length of the turning portion Cr in the radial direction can be reduced in a region of respective teeth 20B in which the dimension in the circumferential direction increases. Also, the length of the turning portion Cr in the radial direction can be increased in a region of respective teeth 20B in which the length in the circumferential direction descreases. In this way, the length of the winding of the portion wound on the bobbin base portion 30C can be constant simply by changing the height of the support surface 30a with respect to the main surface 20a.

Therefore, even when the region in which the dimension in the circumferential direction changes is formed in the respective teeth 20B, the length of the winding per one turn can be kept constant, and the tension applied to the winding can be constant. Thus, it is possible to reduce the possibility of occurrence of the winding loosening and to manufacture the stator 19B more easily. Furthermore, the stress concentration can be reduced by forming the first curved portion 203B or the second curved portion 204B. Accordingly, it is possible to achieve both prevention of the damage to the stator core 20 and simplification of the manufacturing process by avoiding the winding loosening of the winding. Thus, the stator 19B can be easily manufactured while securing stable performance.

Accordingly, the motor 18 which can be easily manufactured and has improved performance can be provided. Furthermore, the performance improvement of the motor 18 and thus the performance improvement of the compressor 10 can be achieved.

### (Other modified examples of embodiment)

Although the embodiment of the present invention have been described above in detail with reference to the drawings, each constitution in the embodiment and the combination thereof are one example, and addition, omission, substitution, and other modifications of the constitution are possible: the present invention is not limited by the embodiment, and is limited only by the scope of claims.

The winding length adjustment portion 36 is not limited to the structure in which the winding length is changed by the inclined surface as in the embodiment. As long as the winding length adjustment portion 36 has a structure capable of changing the winding length, for example, a curved surface may be formed or a groove may be formed.

Moreover, in the above-described embodiment, the example in which the angles of the first inclined surface 31a and the second inclined surface 32a in the bobbin base portions 30C are constant over the entire region in the radial direction has been described. However, the aspect of the first inclined surface 31a and the second inclined surface 32a is not limited thereto. As another example, the first inclined surface 31a may be formed so that the inclination angle partially increases or decreases from the outer side toward the inner side in the radial direction. Similarly, the second inclined surface 32a may be formed so that the inclination angle partially increases or decreases from the outer side to the inner side in the radial direction. Furthermore, the first inclined surface 31a and the second inclined surface 32a may be three-dimensionally inclined to approach the main surface 20a as it goes outward in the circumferential direction as well as in the radial direction.

Further, in the above-described embodiment, an example in which the number of teeth 20B in the stator core 20 is nine has been described. However, the number of teeth 20B is not limited thereto and may be eight or less or ten or more.

### Industrial Applicability

According to the present invention, manufacture is able to be performed easily while securing stable performance.

### Reference Signs List

100 Compressor system
10 Compressor
10A Compression mechanism portion
11 Housing
12A First cylinder (cylinder)
12B Second cylinder (cylinder)
R1, R2 Compression chamber
13A First piston rotor (piston rotor)
13B Second piston rotor (piston rotor)
14A, 14B Eccentric shaft portion
16 Crankshaft
18 Motor
19A Rotor
19B Stator
20 Stator core
20a Main surface
20A Yoke
20B Teeth
201B Tooth main body
202B Flange portion
203B First curved portion
S1 First curved surface
204B Second curved portion
S2 Second curved surface
40 Coil
22A First opening (opening)
22B Second opening (opening)
23A First suction port (suction port)
23B Second suction port (suction port)
24 Accumulator
25 Stay
26A First suction pipe (suction pipe)
26B Second suction pipe (suction pipe)
27 Pipe
30 Bobbin
30a Support surface
30A Outer edge portion
30B Inner edge portion
30C Bobbin base portion
35 Base main body
36 Wiring length adjustment portion
31a First inclined surface
32a Second inclined surface
Cr Turning portion
Cr1 First outer turning portion
Cr2 First inner turning portion
Cr3 Second inner turning portion
Cr4 Second outer turning portion
O Axis

## Claims

1. Astator (19B) for a motor (18), the stator (19B) comprising:
a stator core (20) including an annular yoke (20A) centered on an axis (O), and a plurality of teeth (20B) protruding inward from an inner peripheral surface of the yoke (20A) in a radial direction centered on the axis (O);
a bobbin (30) provided on main surfaces (20a) of the stator core (20), the main surfaces facing both sides of the stator core (20) in a direction of the axis (O); and
a coil (40) having a winding wound on the teeth (20B) and the bobbin (30),
wherein the respective teeth (20B) have a non-constant width portion (203B, 204B) of which a length in a circumferential direction around the axis (O) differs depending on a position in the radial direction,
the bobbin (30) has a support portion (30C), the support portion (30C) extending in the radial direction and facing one side in the direction of the axis (O), the support portion further having a support surface (30a) which supports the winding (40) and faces in the direction of the axis, **characterized in that**
the support portion (30C) has a winding length adjustment portion (36) which is formed at a position corresponding to the non-constant width portion (203B, 204B) when seen in the direction of the axis (O), reduces a winding length which is a length of the winding around the support portion (30C) as a length of the respective teeth (20B) in the circumferential direction increases and increases the length as the length of the respective teeth (20B) in the circumferential direction decreases, so that
stress concentration in the stator core is suppressed by the winding length adjustment portion.

2. The stator (19B) according to claim 1, wherein the winding length adjustment portion (36) is formed so that a length between the support surface (30a) and the main surface (20a) in the direction of the axis decreases as the length of the respective teeth (20B) in the circumferential direction increases and the length between the support surface (30a) and the main surface (20a) in the direction of the axis increases as the length of the respective teeth (20B) decrease.

3. The stator (19B) according to claim 2, wherein, in the winding length adjustment portion (36), the support surface (30a) is an inclined surface (31a, 32a) which is inclined such that it approaches the main surface (20a) as the length of the respective teeth (20B) in the circumferential direction increases.

4. The stator (19B) according to any one of claims 1 to 3,
wherein the respective teeth (20B) include
a tooth main body (201B) which has a constant length in the circumferential direction and extends in the radial direction, and
a first curved portion (203B) which is the non-constant width portion and connects the tooth main body (201B) to the yoke (20A) in a curved surface (S1) in which a length in the circumferential direction gradually increases from the tooth main body (201B) toward the yoke (20A) when seen in the direction of the axis (O).

5. The stator (19B) according to claim 4,
wherein the respective teeth (20B) include
a flange portion (202B) which is provided inward in the radial direction with respect to the tooth main body (201B) and in which the length in the circumferential direction is longer than the tooth main body (201B), and
a second curved portion (204B) which is the non-constant width portion and connects the tooth main body (201B) to the flange portion (202B) in a curved surface (S2) in which a length in the circumferential direction gradually increases from the tooth main body (201B) toward the flange portion (202B) when seen in the direction of the axis (O).

6. A motor (18) comprising:
a rotor (19A) which is rotatable around an axis (O); and
the stator (19B) according to any one of claims 1 to 5 which surrounds the rotor (19A) from an outer peripheral side of the rotor (19A).

7. A compressor (10) comprising:
a motor (18) according to claim 6;
a compression mechanism portion (10A) which is driven by the motor (18) to compress fluid; and
a housing (11) which covers the motor (18) and the compression mechanism portion (10A).

## Patentansprüche

1. Stator (19B) für einen Motor (18), wobei der Stator (19B) Folgendes umfasst:
einen Statorkern (20), der ein ringförmiges Joch (20A), das auf eine Achse (O) zentriert ist, und eine Vielzahl von Zähnen (20B), die von einer Innenperipheriefläche des Jochs (20A) in einer Radialrichtung, die auf die Achse (O) zentriert ist, nach innen vorstehen, beinhaltet;
einen Spulenkörper (30), der auf Hauptflächen (20a) des Statorkerns (20) vorgesehen ist, wobei die Hauptflächen in einer Richtung der Achse (O) zu beiden Seiten des Statorkerns (20) weisen; und
eine Spule (40) mit einer Wicklung, die auf die Zähne (20B) und den Spulenkörper (30) gewickelt ist,
wobei die jeweiligen Zähne (20B) einen nicht konstanten Breitenabschnitt (203B, 204B) aufweisen, von dem eine Länge in einer Umfangsrichtung um die Achse (O) in Abhängigkeit von einer Position in der Radialrichtung unterschiedlich ist,
der Spulenkörper (30) hat einen Stützabschnitt (30C), wobei sich der Stützabschnitt (30C) in die Radialrichtung erstreckt und in der Richtung der Achse (O) zu einer Seite weist, wobei der Stützabschnitt ferner eine Stützfläche (30a) hat, die die Wicklung (40) stützt und in die Richtung der Achse weist, **dadurch gekennzeichnet, dass**
der Stützabschnitt (30C) einen Wicklungslängeneinstellabschnitt (36) aufweist, der in einer Position gebildet ist, die in der Richtung der Achse (O) gesehen dem nicht konstanten Breitenabschnitt (203B, 204B) entspricht, reduziert eine Wicklungslänge, die eine Länge der Wicklung um den Stützabschnitt (30C) ist, wenn sich eine Länge der jeweiligen Zähne (20B) in der Umfangsrichtung erhöht, und erhöht die Länge, wenn sich die Länge der jeweiligen Zähne (20B) in der Umfangsrichtung verringert, derart, dass
eine Spannungskonzentration im Statorkern durch den Wicklungslängeneinstellabschnitt unterdrückt wird.

2. Stator (19B) nach Anspruch 1, wobei der Wicklungslängeneinstellabschnitt (36) derart gebildet ist, dass sich eine Länge zwischen der Stützfläche (30a) und der Hauptfläche (20a) in der Richtung der Achse verringert, wenn sich die Länge der jeweiligen Zähne (20B) in der Umfangsrichtung erhöht, und die Länge zwischen der Stützfläche (30a) und der Hauptfläche (20a) in die Richtung der Achse erhöht, wenn sich die Länge der jeweiligen Zähne (20B) verringert.

3. Stator (19B) nach Anspruch 2, wobei die Stützfläche (30a) im Wicklungslängeneinstellabschnitt (36) eine geneigte Fläche (31a, 32a) ist, die derart geneigt ist, dass sie sich der Hauptfläche (20a) nähert, wenn sich die Länge der jeweiligen Zähne (20B) in der Umfangsrichtung erhöht.

4. Stator (19B) nach einem der Ansprüche 1 bis 3,
wobei die jeweiligen Zähne (20B) Folgendes beinhalten
einen Zahnhauptkörper (201B), der in der Umfangsrichtung eine konstante Länge hat und sich in die Radialrichtung erstreckt, und
einen ersten gekrümmten Abschnitt (203B), der der nicht konstante Breitenabschnitt ist und den Zahnhauptkörper (201B) auf einer gekrümmten Fläche (S1), auf der sich in der Richtung der Achse (O) gesehen eine Länge in der Umfangsrichtung vom Zahnhauptkörper (201B) zum Joch (20A) allmählich erhöht, mit dem Joch (20A) verbindet.

5. Stator (19B) nach Anspruch 4,
wobei die jeweiligen Zähne (20B) Folgendes beinhalten
einen Flanschabschnitt (202B), der mit Bezug auf den Zahnhauptkörper (201B) in der Radialrichtung nach innen vorgesehen ist und bei dem die Länge in der Umfangsrichtung länger ist als der Zahnhauptkörper (201B), und
einen zweiten gekrümmten Abschnitt (204B), der der nicht konstante Breitenabschnitt ist und den Zahnhauptkörper (201B) auf einer gekrümmten Fläche (S2), auf der sich in der Richtung der Achse (O) gesehen eine Länge in der Umfangsrichtung vom Zahnhauptkörper (201B) zum Flanschabschnitt (202B) allmählich erhöht, mit dem Flanschabschnitt (202B) verbindet.

6. Motor (18), der Folgendes umfasst:
einen Rotor (19A), der um eine Achse (O) drehbar ist; und
den Stator (19B) nach einem der Ansprüche 1 bis 5, der den Rotor (19A) von einer Außenperipherieseite des Rotors (19A) umgibt.

7. Verdichter (10), der Folgendes umfasst:
einen Motor (18) nach Anspruch 6;
einen Verdichtungsmechanismusabschnitt (10A), der vom Motor (18) angetrieben wird, um ein Fluid zu verdichten; und
ein Gehäuse (11), das den Motor (18) und den Verdichtungsmechanismusabschnitt (10A) abdeckt.

## Revendications

1. Stator (19B) pour un moteur (18), le stator (19B) comprenant :
un noyau de stator (20) comprenant une culasse annulaire (20A) centrée sur un axe (O), et une pluralité de dents (20B) faisant saillie vers l'intérieur à partir d'une surface périphérique interne de la culasse (20A) dans une direction radiale centrée sur l'axe (O) ;
une bobine (30) prévue sur des surfaces principales (20a) du noyau de stator (20), les surfaces principales faisant face aux deux côtés du noyau de stator (20) dans une direction de l'axe (O) ; et
une spire (40) ayant un enroulement enroulé sur les dents (20B) et la bobine (30),
dans lequel les dents (20B) respectives ont une partie de largeur non constante (203B, 204B) dont une longueur, dans une direction circonférentielle autour de l'axe (O), diffère en fonction d'une position dans la direction radiale,
la bobine (30) a une partie de support (30C), la partie de support (30C) s'étendant dans la direction radiale et faisant face à un côté dans la direction de l'axe (O), la partie de support ayant en outre une surface de support (30a) qui supporte l'enroulement (40) et est orientée dans la direction de l'axe, **caractérisé en ce que** :
la partie de support (30C) a une partie d'ajustement de longueur d'enroulement (36) qui est formée dans une position correspondant à la partie de largeur non constante (203B, 204B) lorsqu'elle est observée dans la direction de l'axe (O), réduit une longueur d'enroulement qui est une longueur de l'enroulement autour de la partie de support (30C) lorsqu'une longueur des dents (20B) respectives dans la direction circonférentielle augmente et augmente la longueur lorsque la longueur des dents (20B) respectives dans la direction circonférentielle diminue, de sorte que :
la concentration de tension dans le noyau de stator est supprimée par la partie d'ajustement de longueur d'enroulement.

2. Stator (19B) selon la revendication 1, dans lequel la partie d'ajustement de longueur d'enroulement (36) est formée de sorte qu'une longueur entre la surface de support (30a) et la surface principale (20a) dans la direction de l'axe diminue lorsque la longueur des dents (20B) respectives dans la direction circonférentielle augmente et la longueur entre la surface de support (30a) et la surface principale (20a) dans la direction de l'axe augmente lorsque la longueur des dents (20B) respectives diminue.

3. Stator (19B) selon la revendication 2, dans lequel, dans la partie d'ajustement de longueur d'enroulement (36), la surface de support (30a) est une surface inclinée (31a, 32a) qui est inclinée de sorte qu'elle s'approche de la surface principale (20a) lorsque la longueur des dents (20B) respectives dans la direction circonférentielle, augmente.

4. Stator (19B) selon l'une quelconque des revendications 1 à 3,
dans lequel les dents (20B) respectives comprennent :
un corps principal de dent (201B) qui a une longueur constante dans la direction circonférentielle et s'étend dans la direction radiale, et
une première partie incurvée (203B) qui est la partie de largeur non constante et raccorde le corps principal de dent (201B) à la culasse (20A) dans une surface incurvée (S1) dans laquelle une longueur, dans la direction circonférentielle, augmente progressivement du corps principal de dent (201B) vers la culasse (20A), lorsqu'elle est observée dans la direction de l'axe (O).

5. Stator (19B) selon la revendication 4,
dans lequel les dents (20B) respectives comprennent :
une partie de bride (202B) qui est prévue vers l'intérieur dans la direction radiale par rapport au corps principal de dent (201B) et dans lequel la longueur, dans la direction circonférentielle, est plus longue que le corps principal de dent (201B), et
une seconde partie incurvée (204B) qui est la partie de largeur non constante et raccorde le corps principal de dent (201B) à la partie de bride (202B) dans une surface incurvée (S2) dans laquelle une longueur dans la direction circonférentielle augmente progressivement du corps principal de dent (201B) vers la partie de bride (202B), lorsqu'elle est observée dans la direction de l'axe (O).

6. Moteur (18) comprenant :
un rotor (19A) qui peut tourner autour d'un axe (O) ; et
le stator (19B) selon l'une quelconque des revendications 1 à 5, qui entoure le rotor (19A) d'un côté périphérique externe du rotor (19A).

7. Compresseur (10) comprenant :
un moteur (18) selon la revendication 6 ;
une partie de mécanisme de compression (10A) qui est entraînée par le moteur (18) pour comprimer le fluide ; et
un boîtier (11) qui recouvre le moteur (18) et la partie de mécanisme de compression (10A).
